(19)

Europäisches Patentamt

European Patent Office

Office européen des brevets

(11) **EP 4 675 756 A1**

(12) **EUROPEAN PATENT APPLICATION**
published in accordance with Art. 153(4) EPC

(43) Date of publication:
07.01.2026 Bulletin 2026/02

(21) Application number: 23940414.8

(22) Date of filing: 31.10.2023

(51) International Patent Classification (IPC):
$H01M\ 10/613^{(2014.01)}$     $G12B\ 15/02^{(2006.01)}$

(86) International application number:
PCT/CN2023/128433

(87) International publication number:
WO 2024/250538 (12.12.2024 Gazette 2024/50)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 09.06.2023 CN 202310681751

(71) Applicant: Contemporary Amperex Technology
Co., Limited
Ningde, Fujian 352100 (CN)

(72) Inventors:
• YE, Weida
Ningde, Fujian 352100 (CN)
• HUANG, Xiaoteng
Ningde, Fujian 352100 (CN)
• LI, Qing
Ningde, Fujian 352100 (CN)
• LI, Jinkui
Ningde, Fujian 352100 (CN)
• OUYANG, Shijie
Ningde, Fujian 352100 (CN)

(74) Representative: Lorenz Seidler Gossel Part. mbB
Widenmayerstr. 23
80538 München (DE)

(54) **THERMAL MANAGEMENT SYSTEM AND CONTROL METHOD THEREFOR, ENERGY STORAGE SYSTEM, AND ELECTRICAL APPARATUS**

(57) The present application relates to the field of batteries, and provides a thermal management system and a control method therefor, an energy storage system, and an electric apparatus. The thermal management system comprises a first confluence unit, a second confluence unit, a thermal management unit, and an adjustment apparatus. The first confluence unit comprises at least one liquid outlet; the second confluence unit comprises at least one liquid return port; the thermal management unit comprises a plurality of refrigerating branches, and the plurality of refrigerating branches are respectively in fluid connection with the first confluence unit and the second confluence unit in a parallel mode; the adjustment apparatus is used for adjusting the refrigerating capacity of at least one refrigerating branch among the plurality of refrigerating branches.

FIG. 1

**Description**

CROSS-REFERENCE

The present application refers to Chinese Patent Application No. 202310681751.3, entitled "THERMAL MANAGEMENT SYSTEM AND CONTROL METHOD THEREFOR, ENERGY STORAGE SYSTEM, AND ELECTRICAL APPARATUS", filed on June 09, 2023, which is incorporated herein by reference in its entirety.

TECHNICAL FIELD

The present application relates to the technical field of batteries, and in particular, to a thermal management system and a method for controlling the same, an energy storage system, and an electric device.

BACKGROUND

Under the trend of rapid development of the global new energy revolution, the application scenarios of batteries have become increasingly diverse. Various electric devices that use batteries as power sources and energy devices that use batteries as energy storage media have emerged.

The energy storage system features large capacity, short construction cycles, high reliability, and strong environmental adaptability, making it a new development direction in the field of new energy. Since the energy storage system includes a large number of battery cells, a significant amount of heat is generated during the charging and discharging processes of the battery cells. This heat leads to an increase in the temperature of the battery cells inside the container. Due to the dense arrangement of internal battery cells and poor internal airflow circulation, combined with varying degrees of charging and discharging among different cells, the temperature of the battery cells within the energy storage system becomes uneven. This ultimately affects the service life of the battery cells and may even lead to thermal runaway.

At present, cooling methods have gradually shifted from air cooling to liquid cooling. In liquid cooling systems, the heat exchange medium is coolant liquid, which offers advantages such as high heat capacity, high heat exchange coefficient, and fast cooling speed. However, liquid cooling systems require significant investment, have high operating costs, and are difficult to regulate and control in response to changing demands for cooling. As a result, they often fail to meet the cooling requirements under different operating conditions and lead to unnecessary cost and energy consumption.

SUMMARY

The present application aims to solve at least one of the technical problems existing in the background.

To this end, an objective of the present application is to provide a thermal management system and a method for controlling the same, an energy storage system, and an electric device, to improve an adjustment capability of the thermal management system and flexibly meet different demands for cooling capacity.

Embodiments of a first aspect of the present application provide a thermal management system. The thermal management system includes a first manifold unit, a second manifold unit, a thermal management unit, and an adjustment apparatus. The first manifold unit includes at least one liquid outlet. The second manifold unit includes at least one liquid return port. The thermal management unit includes a plurality of cooling branches, and the plurality of cooling branches are separately in fluid connection with the first manifold unit and the second manifold unit in a parallel mode. The adjustment apparatus is configured to adjust the cooling capacity of at least one cooling branch among the plurality of cooling branches.

In the technical solutions of the embodiments of the present application, by providing a plurality of cooling branches connected in parallel, in combination with the cooling capacity of at least one of the plurality of cooling branches being adjustable, a corresponding number of cooling branches may be operated, and the cooling capacity of the cooling branch may be actively adjusted according to demands for cooling, to provide a richer cooling capacity range, thereby flexibly meeting the demand for cooling capacity under different operating condition demands, improving the economy of the operation of the thermal management system, and reducing unnecessary energy loss.

In some embodiments, the compressor of the at least one cooling branch is a variable-frequency compressor, and the adjustment apparatus is connected to the variable-frequency compressor to adjust an operating frequency of the variable-frequency compressor. The use of the variable-frequency compressor may contribute to both the cooling capacity adjustment and the energy consumption control, thereby reducing the energy loss of the thermal management system.

In some embodiments, a compressor of a cooling branch with a maximum cooling capacity among the plurality of cooling branches is a variable-frequency compressor. The compressor of the cooling branch with the maximum cooling capacity is a variable-frequency compressor, such that the cooling capacity of the cooling branch can be adjusted within a relatively larger range. Therefore, the cooling capacity can be changed within a larger range through coordination with other cooling branches, thereby adapting to the demands for cooling under different thermal management operating conditions and improving the application scope of the thermal management system.

In some embodiments, the thermal management unit further includes a heating branch. The heating branch and the plurality of cooling branches are separately in fluid connection with the first manifold unit and the second manifold unit in a parallel mode. By providing the heating branch and connecting the heating branch in parallel with the cooling branches, different processing methods may be implemented for the liquid, so as to better control the liquid temperature at the first manifold unit, thereby improving an external thermal management capability and adjustment range of the thermal management system, and increasing an adaptation range of the thermal management system.

In some embodiments, a plurality of heaters are connected in series on the heating branch. The plurality of heaters are configured to heat a liquid flowing through the heating branch. By providing a plurality of heaters and connecting the heaters in series, the reliability of the heating function may be enhanced while improving the heating efficiency, thereby mitigating the risk of heating failure caused by a single heater malfunction to a certain extent.

In some embodiments, the first manifold unit includes a first cavity, a second cavity, and a connecting cavity. The first cavity is in fluid communication with the thermal management unit. The second cavity is spaced apart from the first cavity, and the second cavity is provided with the at least one liquid outlet. The connecting cavity is in fluid communication with the first cavity and the second cavity separately. The first cavity and the second cavity are spaced apart in the first manifold unit, and the first cavity and the second cavity are connected through the connecting cavity, such that liquids at different temperatures can be mixed in the first manifold unit. Therefore, a temperature of the liquid flowing out from the liquid outlet can be kept consistent as much as possible, helping the thermal management system perform accurate thermal management on a temperature-controlled object.

In some embodiments, a liquid passage cross-sectional area of the connecting cavity is different from a liquid passage cross-sectional area of the first cavity, or different from a liquid passage cross-sectional area of the second cavity. This variable cross-sectional design facilitates better mixing of liquids at different temperatures in the first manifold unit, helping improve the temperature uniformity of the flowing-out liquids.

In some embodiments, the thermal management system further includes a first temperature sensor. The first temperature sensor is configured to detect a liquid temperature in the first manifold unit. In some embodiments, the thermal management system further includes a second temperature sensor. The second temperature sensor is configured to detect a liquid temperature in the second manifold unit. With the temperature sensors, the temperature of the flowing-out liquid and the temperature of the flowing-back liquid are acquired in time, which is conducive to controlling the thermal management unit by the thermal management system to meet different demands for thermal management, thereby facilitating more accurate and efficient thermal management on the temperature-controlled object.

In some embodiments, the thermal management system further includes a control unit. The control unit is electrically connected to the thermal management unit and the adjustment apparatus. By providing the control unit, automatic control of the thermal management system can be achieved, thereby improving an automation level and thermal management efficiency. This meets a complex and changeable demand for thermal management of a temperature-controlled object, and helps perform more accurate and efficient thermal management.

Embodiments of a second aspect of the present application provide a method for controlling the thermal management system. The method includes: determining a required thermal management capacity; and operating one or more branches of the thermal management unit according to the required thermal management capacity. By controlling one or more branches of the thermal management unit to operate or close according to the required thermal management capacity of the temperature-controlled object, the required required thermal management capacity can be provided more accurately, thereby meeting demands for thermal management of the temperature-controlled object in different scenarios and under different operating conditions, and reducing energy consumption of the thermal management system.

In some embodiments, determining the required thermal management capacity of the temperature-controlled object includes: acquiring a current temperature of the temperature-controlled object; and determining, according to the current temperature and a preset target temperature, a required thermal management capacity required for adjusting the temperature-controlled object from the current temperature to the preset temperature. A real-time required thermal management capacity of the temperature-controlled object may be obtained according to the current temperature of the temperature-controlled object and the preset target temperature, to control the thermal management system to adjust the thermal management control strategy in time, such that the thermal management system can always meet the required thermal management capacity, reduce unnecessary energy loss, and improve operating economy of the thermal management system.

In some embodiments, operating the one or more branches of the thermal management unit according to the required thermal management capacity includes: operating a first cooling branch of the thermal management unit in response to the required thermal management capacity being the required cooling capacity and the required cooling capacity being less than or equal to a first cooling capacity, where the cooling capacity of the first cooling branch is greater than or equal to the required cooling capacity; and operating at least two cooling branches of the thermal management unit in response to the required thermal management capacity being the required cooling capacity and the required cooling capacity being greater than the first cooling capacity, where a sum of cooling capacities of the at least two cooling branches is greater than or equal to the required cooling capacity, where the first cooling capacity is a maximum value among a plurality of cooling capacities corresponding to the plurality of cooling branches of the thermal management unit. According to the required cooling capacities under different operating conditions, the corresponding cooling branches are controlled to provide appropriate cooling capacities. This can reduce the energy consumption level of the thermal management system and improve the operating economy of the thermal management system while meeting different demands for cooling and achieving accurate cooling.

In some embodiments, operating the first cooling branch of the thermal management unit in response to the required thermal management capacity being the required cooling capacity and the required cooling capacity being less than or equal to the first cooling capacity, where the cooling capacity of the first cooling branch is greater than or equal to the required cooling capacity, further includes: acquiring an operating frequency of a compressor of the first cooling branch; closing the first cooling branch and operating a second cooling branch of the thermal management unit in response to a case where the operating frequency of the compressor of the first cooling branch is greater than a first preset frequency, where a cooling capacity of the second cooling branch is greater than the cooling capacity of the first cooling branch; closing the first cooling branch and operating a third cooling branch of the thermal management unit in response to a case where the operating frequency of the compressor of the first cooling branch is less than a second preset frequency, where a cooling capacity of the third cooling branch is greater than or equal to the required cooling capacity, and less than the cooling capacity of the first cooling branch; and simultaneously operating the first cooling branch and a fourth cooling branch of the thermal management unit in response to a case where the operating frequency of the compressor of the first cooling branch is greater than the first preset frequency and the first cooling branch is the cooling branch with the maximum cooling capacity in the thermal management unit, where a cooling capacity of the fourth cooling branch is less than or equal to the cooling capacity of the first cooling branch, where the second preset frequency is less than the first preset frequency. The control strategy of the cooling branch is further optimized according to the operating frequency of the compressor, such that the thermal management system can reduce the operating costs of the thermal management system, improve the operating economy, and extend the service life of the device while providing sufficient cooling capacity to meet the demand for cooling.

In some embodiments, operating the first cooling branch of the thermal management unit in response to the required thermal management capacity being the required cooling capacity and the required cooling capacity being less than or equal to the first cooling capacity, where the cooling capacity of the first cooling branch is greater than or equal to the required cooling capacity, further includes: acquiring cumulative operating duration of each cooling branch of the thermal management unit whose cooling capacity is greater than or equal to the required cooling capacity, and determining a cooling branch with shortest cumulative operating duration as the first cooling branch. The control strategy of the cooling branch is further assisted and optimized in combination with the cumulative operating duration of the cooling branch, thereby better balancing the service life of the devices in each branch, alleviating the excessive wear caused by over-use of some devices, and improving the overall service life of the thermal management system.

In some embodiments, operating the at least two cooling branches of the thermal management unit in response to the required thermal management capacity being the required cooling capacity and the required cooling capacity being greater than the first cooling capacity, where the sum of the cooling capacities of the at least two cooling branches is greater than or equal to the required cooling capacity, further includes: respectively acquiring operating frequencies of compressors of the at least two cooling branches; closing the cooling branch whose operating frequency of the compressor is less than or equal to the corresponding second preset frequency in response to a case where the operating frequency of the compressor is less than or equal to the second preset frequency of the compressor; and controlling a compressor with an operating frequency greater than the corresponding first preset frequency to operate at the first preset frequency in response to a case where the operating frequency of the compressor is greater than the first preset frequency of the compressor, where the second preset frequency is less than the first preset frequency. By optimizing the control strategy of the thermal management branch when the operating frequency of the compressor exceeds the preset frequency range between the first preset frequency and the second preset frequency, the energy consumption level of the thermal management system is reduced, and the service life of the device in the thermal management system is extended, thereby improving the overall economy of the thermal management system.

In some embodiments, operating the one or more of the thermal management units according to the required thermal management capacity further includes: operating the heating branch of the thermal management unit in response to the required thermal management capacity being a required heating capacity. By configuring the heating branch to heat the liquid, the demand for heating of the temperature-controlled object can be met, thereby expanding an application scope of the thermal management system.

Embodiments of a third aspect of the present application provide an electronic device. The electronic device includes: at least one processor; and a memory communicatively connected to the at least one processor, where the memory stores an instruction executable by the at least one processor, and the instruction is executed by the at least one processor, such that the at least one processor can perform the method for controlling the thermal management system according to the above embodiments.

Embodiments of a fourth aspect of the present application provide a computer-readable storage medium having a computer program stored thereon. The computer program, when executed by a processor, implements the method for controlling the thermal management system according to the above embodiments.

Embodiments of a fifth aspect of the present application provide an energy storage system. The energy storage system includes an energy storage battery and the thermal management system according to the above embodiments. The thermal management system is configured to adjust a temperature of the energy storage battery.

Embodiments of a sixth aspect of the present application provide an electric device. The electric device includes a battery and the thermal management system according to the above embodiments. The thermal management system is configured to adjust a temperature of the battery.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

BRIEF DESCRIPTION OF THE DRAWINGS

In the accompanying drawings, unless otherwise specified, the same reference numerals across multiple accompanying drawings indicate the same or similar components or elements. The accompanying drawings are not necessarily drawn to scale. It should be understood that the accompanying drawings depict only some embodiments of the present application and are therefore not to be considered as limiting the scope of the present application.

FIG. 1 is a structural schematic view of an energy storage system according to some embodiments of the present application;
FIG. 2 is a structural schematic view of a thermal management system according to some embodiments of the present application;
FIG. 3 is a structural schematic view of a cooling branch according to some embodiments of the present application;
FIG. 4 is a structural schematic view of a first manifold unit according to some embodiments of the present application;
FIG. 5 is a schematic flowchart of a method for controlling a thermal management system according to some embodiments of the present application;
FIG. 6 is a schematic flowchart of part of steps of a method for controlling a thermal management system according to some embodiments of the present application;
FIG. 7 is a schematic flowchart of another part of steps of a method for controlling a thermal management system according to some embodiments of the present application;
FIG. 8 is a schematic flowchart of yet another part of steps of a method for controlling a thermal management system according to some embodiments of the present application;
FIG. 9 is a schematic flowchart of a method for controlling a thermal management system according to some other embodiments of the present application; and
FIG. 10 is a schematic flowchart of a method for controlling a thermal management system according to yet other embodiments of the present application.

DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the claimed scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", and "provided with", and any variations thereof in the description and claims of the present application and the above drawing description encompass non-exclusive inclusions.

In the description of the embodiments of the present application, technical terms such as "first", "second", and the like are only used to distinguish different objects and should not be interpreted as indicating or implying the relative importance or implicitly indicating the number, specific order, or primary and secondary relationship of the noted technical features. In the description of the embodiments of the present application, unless otherwise specifically defined, "plurality of" means two or more.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicate orientations or positional relationships based on those shown in the drawings. They are merely for the convenience of describing the present application and simplifying the description, rather than indicating or implying that the apparatus or element referred to must have a specific orientation or be constructed and operated in the specific orientation, and thus should not be construed as a limitation to the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application can be interpreted according to specific conditions.

At present, judging from the trends in the market, the application of power batteries is becoming increasingly widespread. Power batteries are not only applied in energy storage power systems such as hydropower, thermal power, wind power, and solar power stations, but are also widely applied in electric transportation vehicles such as electric bicycles, electric motorcycles, or electric cars, as well as in military equipment, aerospace, and other fields. With the continuous expansion of the application field of power batteries, the market demand for power batteries is also constantly increasing.

As the demand for batteries increases, the thermal management requirements for battery systems are also becoming more stringent. The batteries in energy storage systems or electric devices have different thermal processing demands under different operating conditions, and the operating power of the thermal management system is limited, and the cooling capacity provided is relatively fixed. When the cooling capacity required exceeds the cooling capacity of the thermal management system, the thermal management system cannot meet the corresponding demands for cooling. When the cooling capacity required is low, the excess cooling capacity of the thermal management system will be wasted, resulting in energy loss.

To alleviate the problems of high difficulty in regulation and control and high energy consumption level of the thermal management system, a plurality of thermal management branches connected in parallel may be provided in the thermal management system. Independent control of the plurality of thermal management branches enables coordination between the branches to achieve a combination of different thermal management capabilities, thereby meeting thermal processing demands of temperature-controlled objects in different scenarios and under different operating conditions, simplifying the regulation difficulty of the thermal management system. This is conducive to reducing the energy consumption of the thermal management system, and improving the operating economy of the thermal management system.

Based on the above consideration, to solve the problems of high difficulty in regulation and control and low operating economy of the thermal management system, the present application proposes that a thermal management unit between a first manifold unit and a second manifold unit in the thermal management system is configured to include a plurality of cooling branches. The plurality of cooling branches are separately in fluid connection with the first manifold unit and the second manifold unit in a parallel mode. A cooling capacity of at least one of the plurality of cooling branches is adjustable.

By connecting a plurality of cooling branches in parallel and enabling at least one cooling branch to be adjustable in cooling capacity, the thermal management unit can provide various cooling capacities to the outside through coordination between different branches, thereby flexibly meeting the demand for cooling in different scenarios and under different operating conditions. This enables more accurate thermal management of the temperature-controlled object and improves thermal management efficiency and operating economy.

The battery cell disclosed in the embodiments of the present application can be used in, but is not limited to be used in, electric devices such as vehicles, ships, or aircrafts. The power system of the electric device can be composed of the battery cell, the battery, or the like disclosed in the present application, helping to alleviate the problems of high difficulty in regulation and control and high energy consumption of the thermal management system.

The embodiments of the present application provide an electric device using a battery as a power source. The electric device may be, but is not limited to, a mobile phone, a tablet, a laptop computer, an electric toy, an electric tool, an electric bicycle, an electric vehicle, a ship, a spacecraft, and the like. The electric toys may include stationary or mobile electric toys, such as game consoles, electric car toys, electric ship toys, or electric airplane toys. The spacecrafts may include airplanes, rockets, space shuttles, spaceships, and the like.

In the following embodiments, for ease of description, the present application is illustrated by taking an energy storage system 1000 as an example according to an embodiment of the present application.

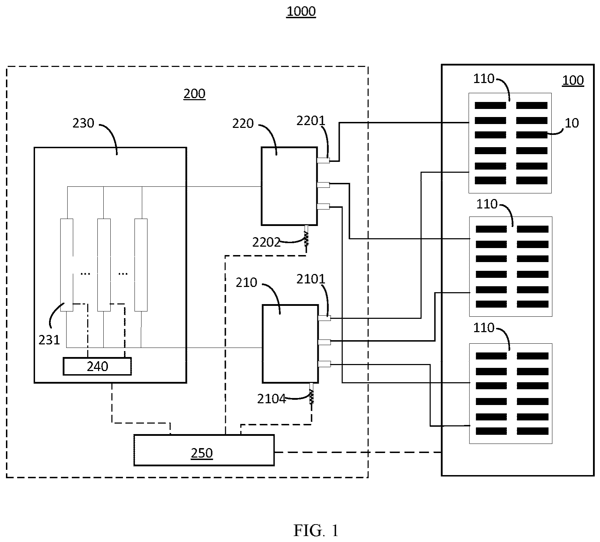

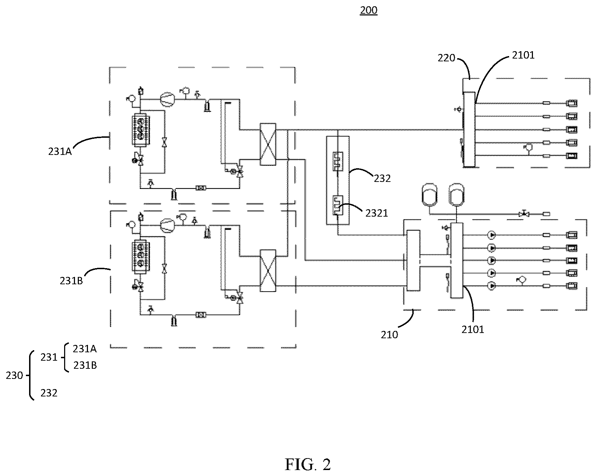

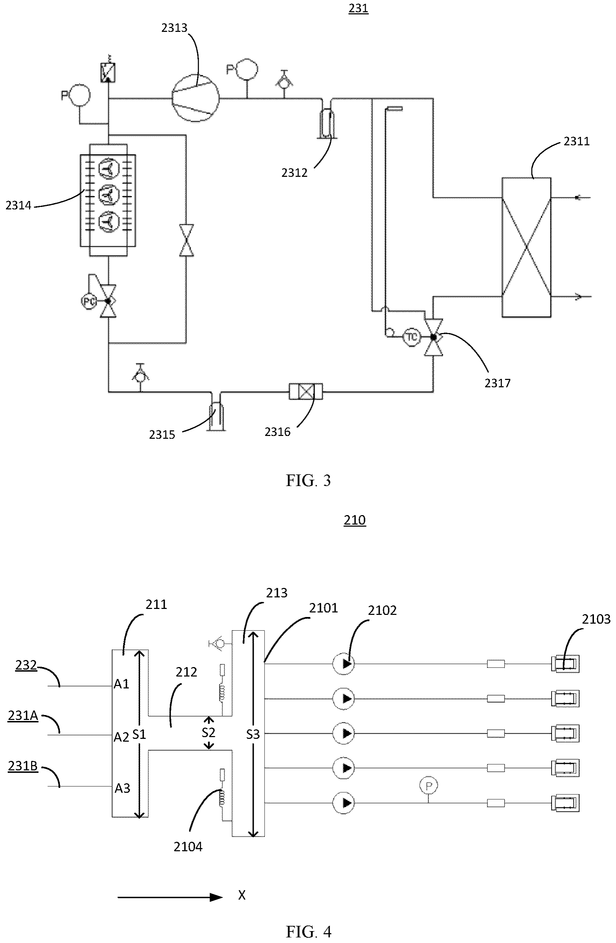

Referring to FIG. 1, FIG. 1 is a structural schematic view of an energy storage system 1000 according to some embodiments of the present application; FIG. 2 is a structural schematic view of a thermal management system 200 according to some embodiments of the present application; and FIG. 3 is a structural schematic view of a cooling branch 231 according to some embodiments of the present application.

The energy storage system 1000 includes an energy storage battery 100 and a thermal management system 200. The energy storage battery 100 includes a battery configured for electrochemical energy storage. The energy storage battery 100 may include a plurality of separately arranged battery sets 110, and each battery set 110 includes a plurality of battery cells 10. The thermal management system 200 is a processing system configured to perform thermal management on the energy storage battery 100. The thermal management system 200 may be connected to each battery set 110 through a pipeline to achieve thermal management of each battery set 110.

The energy storage system 1000 may be a container-type energy storage system, or may be an energy storage system in another structural form. This is not specifically limited in the embodiments. The energy storage battery 100 and the thermal management system 200 may be configured as an integrated structure, for example, integrated into a container case, or may be arranged separately, with the two connected through a pipeline.

The embodiments of the present application provide a thermal management system 200. As shown in FIGs. 1 to 3, the thermal management system 200 includes a first manifold unit 210, a second manifold unit 220, a thermal management unit 230, and an adjustment apparatus 240. The first manifold unit 210 includes at least one liquid outlet 2101. The second manifold unit 220 includes at least one liquid return port 2201. The thermal management unit 230 includes a plurality of cooling branches 231. The plurality of cooling branches 231 are separately in fluid connection with the first manifold unit 210 and the second manifold unit 220 in a parallel mode. The adjustment apparatus 240 is configured to adjust the cooling capacity of at least one of the plurality of cooling branches 231.

The thermal management system 200 is a system configured to perform thermal management on a temperature-controlled object. In the embodiments, the thermal management system 200 may be a liquid cooling system. The liquid cooling system includes the first manifold unit 210, the thermal management unit 230, and the second manifold unit 220 which are in fluid communication with each other. The temperature-controlled object may be any object that has a demand for thermal management, such as energy storage batteries, power batteries, etc. The liquid outlet 2101 of the first manifold unit 210 and the liquid return port 2201 of the second manifold unit 220 are in fluid communication with the temperature-controlled object through a pipeline separately, such that heat exchange can be achieved in a liquid cooling manner, thereby adjusting the temperature of the temperature-controlled object.

The second manifold unit 220 is a manifold structure at the liquid return end of the thermal management system 200, and includes at least one liquid return port 2201. The second manifold unit 220 may include a flow mixing cavity. The flow mixing cavity is configured to mix the liquid flowing back from the at least one liquid return port 2201.

The first manifold unit 210 is a manifold structure of the liquid outlet end of the thermal management system 200. The first manifold unit 210 includes at least one liquid outlet 2101. The first manifold unit 210 may include a flow mixing cavity. The flow mixing cavity is configured to mix the fluids supplied from the plurality of branches of the thermal management unit 230. Each liquid outlet 2101 is connected to one battery set 110 in the energy storage battery 100 through a pipeline. Liquid provided for the energy storage battery 100 performs thermal management on the battery set 110 through heat exchange. The liquid that has undergone the thermal management flows back to the liquid return port of the second manifold unit 220 through the pipeline, and converges and mixes in the second manifold unit 220, and then flows to the thermal management unit 230.

The thermal management unit 230 includes a plurality of cooling branches 231, and each cooling branch 231 may independently cool a liquid passing through the cooling branch, thereby reducing a temperature of the liquid. The plurality of cooling branches 231 are separately in fluid connection with the first manifold unit 210 and the second manifold unit 220 in a parallel mode.

As shown in FIG. 2, the thermal management unit 230 includes a plurality of cooling branches 231 arranged in parallel, such as a first cooling branch 231A and a second cooling branch 231B. The cooling branch 231 may exchange heat with the inflowing liquid in a liquid cooling manner, such that a temperature of the liquid when flowing out is lower than a temperature of the liquid when flowing in. It can be understood that the plurality of cooling branches 231 (such as the first cooling branch 231A and the second cooling branch 231B) may be in the same structural form, for example, have the same functional components and pipeline connection forms. The same functional components herein refer to components having the same function, though specific models and parameters may be different. The plurality of cooling branches 231 may be independently controlled in terms of operating state, and may be operated and closed individually.

As shown in FIG. 3, in some examples, the cooling branch 231 includes an evaporator 2311, a gas-liquid separator 2312, a compressor 2313, a condenser 2314, a liquid receiver 2315, and an expansion valve 2316 connected in sequence. The coolant liquid enters the second manifold unit 220 through the liquid return port 2201 and then enters the evaporator 2311 of the cooling branch 231 for heat exchange, to transfer heat to the refrigerant. The refrigerant absorbs heat and evaporates in the evaporator 2311, then passes through the filter-drier of the gas-liquid separator 2312, and is compressed by the compressor 2313. The compressed refrigerant is a high-pressure refrigerant. The high-pressure refrigerant then enters the condenser 2314 for condensation, and is forced by the fan to dissipate heat absorbed in the refrigerant to the atmosphere. After being throttled by the expansion valve 2316, the condensed high-pressure and low-temperature refrigerant liquid changes back to a low-temperature liquid refrigerant, and then flows into the evaporator 2311, thereby forming an entire cooling cycle. The evaporator 2311 may be a plate heat exchanger.

The cooling capacity of the cooling branch 231 is an index for measuring the ability of the cooling device in the cooling branch to reduce the target heat during operation, and the international system of units is watt (W). In some examples, the cooling branch 231 is a liquid cooling branch, and the cooling capacity thereof can be calculated by the temperature difference flow method or the time-based temperature rise method. The calculation formula of the temperature difference flow method is:

$$Q = C_p \cdot r \cdot V_s \cdot \Delta T,$$

where $Q$ is the cooling capacity (KW); $C_p$ is the specific heat at constant pressure (KJ/kg·°C), such as 4.1868 KJ/Kg·°C; r is the specific weight (Kg/m$^3$), such as 1000 Kg/m$^3$; $V_s$ is the water flow rate (m$^3$/h), such as 1.5 m$^3$/h; $\Delta T$ is the water temperature difference (°C), which is the difference value between the outlet water temperature and the inlet water temperature.

The adjustment apparatus 240 is connected to at least one cooling branch 231 to control the cooling capacity of the at least one cooling branch 231. The cooling capacity of the at least one cooling branch 231 may change within a certain set range, thereby outputting a corresponding cooling capacity as required to meet different demands for cooling. In some examples, the adjustment apparatus 240 may control an operating parameter of the functional components on the cooling branch 231 to adjust the cooling capacity, for example, to adjust an operating frequency or a rotational speed of the compressor on the cooling branch 231, a channel area of the suction stop valve of the compressor, or the like. In some examples, the cooling capacity of the cooling branch 231 may be adjusted in a stepless adjustment manner, thereby providing a richer cooling capacity output range.

By providing a plurality of cooling branches 231 connected in parallel and adjusting the cooling capacity of at least one of the plurality of cooling branches by using the adjustment apparatus 240, a corresponding number of cooling branches 231 may be operated, and the cooling capacity of a single cooling branch 231 may be actively adjusted according to demands for cooling, to provide a richer cooling capacity output range, thereby flexibly meeting the demand for cooling capacity under different operating condition demands. Meanwhile, the cooling branches connected in parallel may operate independently without affecting each other, even if some cooling branches fail, other cooling branches can continue to output to the outside, and the cooling capacity may be adjusted as required to meet the demand for cooling as much as possible, thereby improving the economy and stability of the operation of the thermal management system and reducing unnecessary energy loss.

According to some embodiments of the present application, the compressor 2313 of the at least one cooling branch 231 is a variable-frequency compressor, and the adjustment apparatus 240 is connected to the variable-frequency compressor to adjust an operating frequency of the variable-frequency compressor.

Compared with a compressor having a relatively constant rotational speed, a variable-frequency compressor refers to a compressor whose rotational speed can be continuously adjusted within a certain range through a control method or means, thereby allowing for continuous variation in output energy. In some examples, the variable-frequency compressor may be divided into two parts. One part is a variable-frequency controller, and the other part is a compressor. The principle of the variable-frequency controller is to convert an alternating current in the power grid into a square wave pulse for output, thereby controlling the rotational speed of a motor driving the compressor by adjusting the frequency of the square wave pulse (that is, adjusting a duty cycle). The higher the operating frequency of the compressor is, the higher the rotational speed is. When other conditions remain constant, the cooling capacity of the cooling branch where the compressor is located is also higher. In some examples, the compressors 2313 of the plurality of cooling branches 231 may all be variable-frequency compressors. Alternatively, the compressors 2313 of some of the cooling branches 231 may be variable-frequency compressors, and the compressors 2313 of some of the cooling branches 231 may be fixed-frequency compressors. For the cooling branch 231 using a fixed-frequency compressor, the cooling capacity externally provided by the cooling branch is the rated cooling capacity. For the cooling branch 231 using a variable-frequency compressor, the rated cooling capacity is no longer a fixed value, but may change within a certain range, i.e., between the minimum cooling capacity and the maximum cooling capacity. The adjustment apparatus 240 may adjust the operating frequency of the variable-frequency compressor according to a cooling capacity required to be output by the cooling branch 231 where the variable-frequency compressor is located determined according to actual demands for cooling, thereby adjusting the cooling capacity of the cooling branch 231.

By providing the variable-frequency compressor, the adjustment apparatus 240 achieves the cooling capacity of the cooling branch 231 where the variable-frequency compressor is located by adjusting the operating frequency of the variable-frequency compressor, such that the thermal management system 200 can provide cooling capacities within different ranges to the outside, thereby better meeting different operating condition demands. This may contribute to both the cooling capacity adjustment and the energy consumption, reduce the energy loss of the thermal management system 200, and improve the operating economy of the thermal management system 200.

According to some embodiments of the present application, a compressor of a cooling branch with the maximum cooling capacity among the plurality of cooling branches 231 is a variable-frequency compressor.

The cooling branch with the maximum cooling capacity is a cooling branch with the maximum rated cooling capacity that can be provided by the plurality of cooling branches 231. For the cooling branch 231 where the variable-frequency compressor is located, a corresponding rated cooling capacity is within the cooling capacity range. In this case, the maximum value of the cooling capacity range may be used as the rated cooling capacity of the cooling branch 231 to compare with the rated cooling capacity of other cooling branches 231, thereby determining the cooling branch with the maximum cooling capacity. In some examples, as shown in FIG. 2, the plurality of cooling branches 231 at least include a first cooling branch 231A and a second cooling branch 231B. The compressor of the second cooling branch 231B is a variable-frequency compressor, the cooling capacity of the first cooling branch 231A is 15 KW, and the cooling capacity of the second cooling branch 231B is adjustable within a range of 0-25 KW. Therefore, by controlling the first cooling branch 231A and the second cooling branch 231B to coordinate, the cooling capacity can be supplied in a range of 0-40 KW.

The compressor of the cooling branch with the maximum cooling capacity is a variable-frequency compressor, such that the cooling capacity of the cooling branch can be adjusted within a relatively larger range. Therefore, the cooling capacity can be changed within a larger range through coordination with other cooling branches, thereby adapting to the demands for cooling under different thermal management operating conditions and improving the application scope of the thermal management system.

According to some embodiments of the present application, as shown in FIG. 2, the thermal management unit 230 further includes a heating branch 232. The heating branch 232 and the plurality of cooling branches 231 are separately in fluid connection with the first manifold unit 210 and the second manifold unit 220 in a parallel mode.

The heating branch 232 is a branch that can heat the liquid passing through. The heating branch 232 and the cooling branch 231 are arranged in parallel to perform different thermal processing (heating or cooling) on the liquid separately. Therefore, when the demand for cooling required by a temperature-controlled object decreases, except that the cooling capacity of the cooling branch may be adjusted, a reduction in the cooling capacity is achieved through coordination with the heating branch 232, thereby meeting the thermal management requirement of the temperature-controlled object. In some other embodiments, the heating branch 232 may also be independently controlled to operate, thereby heating the temperature-controlled object (such as an energy storage battery). One or more heating branches 232 may be present. The plurality of heating branches 232 may be connected in parallel to the thermal management unit 230.

By providing the heating branch 232 and connecting the heating branch in parallel with the cooling branches 231, different processing methods may be implemented for the liquid, so as to better control the liquid temperature at the first manifold unit 210, thereby improving an external thermal management capability and adjustment range of the thermal management system, and increasing an adaptation range of the thermal management system.

According to some embodiments of the present application, a plurality of heaters 2321 are connected in series on the heating branch 232. The heaters 2321 are configured to heat liquid flowing through the heating branch.

The heater 2321 may be any apparatus that heats the liquid, such as an electromagnetic heater, a resistance heater, or an infrared heater. The plurality of heaters 2321 are connected in series in the heating branch 232, and may jointly heat the liquid flowing through the heating branch 232. The plurality of heaters 2321 also operate independently, and may be turned on and off individually.

By providing a plurality of heaters 2321 and connecting the heaters in series, the reliability of the heating function may be enhanced while improving the heating efficiency, thereby mitigating the risk of heating failure caused by a single heater malfunction to a certain extent.

Referring to FIG. 4, FIG. 4 is a structural schematic view of a first manifold unit 210 according to some embodiments of the present application.

According to some embodiments of the present application, the first manifold unit 210 includes a first cavity 211, a second cavity 213, and a connecting cavity 212. The first cavity 211 is in fluid communication with the thermal management unit 230. The second cavity 213 is spaced apart from the first cavity 211, and the second cavity 213 is provided with the at least one liquid outlet 2101. The connecting cavity 212 is in fluid communication with the first cavity 211 and the second cavity 213 separately.

The first cavity 211 may be provided with different liquid inlets, which are in fluid communication with the cooling branches 231 and the heating branches 232 of the thermal management unit 230 separately, to receive the liquid heated or cooled by the thermal management unit 230. As shown in FIG. 4, a first inlet A1, a second inlet A2, and a third inlet A3 are spaced apart in the first cavity 211. The first inlet A1 is in communication with the heating branch 232 of the thermal management unit 230, the second inlet A2 is in communication with the first cooling branch 231A, and the third inlet A3 is in communication with the second cooling branch 231B. Due to the differences in thermal processing capabilities among different branches of the thermal management unit 230, the temperature of the liquid flowing to the first cavity 211 may vary. Therefore, the temperatures of the liquid around the first inlet A1, the second inlet A2, and the third inlet A3 in the first cavity 211 may also differ. In this case, if the liquid directly flows out through the connected liquid outlets 2101, the liquid temperatures at different liquid outlets 2101 may be different, thereby directly affecting the thermal management effect of the thermal management system 200 on the temperature-controlled object. In the embodiments, the at least one liquid outlet 2101 is disposed on the second cavity 213, and the second cavity 213 is spaced apart from the first cavity 211 and connected to the first cavity through the connecting cavity 212. Therefore, the liquids flowing to the first manifold unit 210 from the thermal management unit 230 first accumulate in the first cavity 211, and then enter the second cavity 213 through the connecting cavity 212. During this process, the liquids at different temperatures are mixed to become thermally uniform, and finally flow out from the liquid outlet 2101 of the second cavity. The liquid outlet 2101 may be connected to the water pump 2102 through a pipeline, and finally connected to a fluid connector of the battery set 110 of the energy storage battery 100 through the connector 2103.

The first cavity 211 and the second cavity 213 are spaced apart in the first manifold unit 210, and the first cavity and the second cavity are connected through the connecting cavity 212, such that liquids at different temperatures can be mixed in the first manifold unit 210. Therefore, a temperature of the liquid flowing out from the liquid outlet 2101 can be kept consistent as much as possible, helping the thermal management system 200 perform accurate thermal management on a temperature-controlled object.

According to some embodiments of the present application, a liquid passage cross-sectional area of the connecting cavity 212 is different from a liquid passage cross-sectional area of the first cavity 211, or different from a liquid passage cross-sectional area of the second cavity 213.

The liquid passage cross-sectional area refers to the cross-sectional area perpendicular to the fluid flow direction. As shown in FIG. 4, the liquid in the first manifold unit 210 flows to one end of the second cavity 213 from one end of the first cavity 211, and the flow direction of the liquid is the first direction X. In this case, the liquid passage cross-sectional area is a cross-sectional area perpendicular to the first direction X. That is, the liquid passage cross-sectional area of the first cavity 211 is S1, the liquid passage cross-sectional area of the connecting cavity 212 is S2, and the liquid passage cross-sectional area of the second cavity 213 is S3, where S2 and S1 are unequal, or S2 and S3 are unequal. In some examples, S1, S2, and S3 may satisfy: S2 < S1 < S3.

As shown in FIG. 4, the first cavity 211, the connecting cavity 212, and the second cavity 213 may form a variable cross-sectional structure similar to an "I" shape, to facilitate uniform mixing of the fluid during advancing.

In the embodiments, the liquid passage cross-sectional area of the connecting cavity 212 is different from the liquid passage cross-sectional area of the first cavity 211, or different from the liquid passage cross-sectional area of the second cavity 213, resulting in a variable cross-sectional flow cavity formed inside the first manifold unit 210. This variable cross-sectional design facilitates better mixing of liquids at different temperatures in the first manifold unit 210, helping improve the temperature uniformity of the flowing-out liquids.

According to some embodiments of the present application, the thermal management system 200 further includes a first temperature sensor 2104. The first temperature sensor 2104 is configured to detect a liquid temperature in the first manifold unit 210.

In some embodiments, the thermal management system 200 further includes a second temperature sensor 2202. The second temperature sensor 2202 is configured to detect a liquid temperature in the second manifold unit 220.

The first temperature sensor 2104 and the second temperature sensor 2202 may be any temperature detection apparatus, such as a thermistor sensor, a thermocouple sensor, or a platinum resistance temperature detector, which is not limited in the present application. The first temperature sensor 2104 and the second temperature sensor 2202 may be of the same sensor type, or may be of different sensor types.

By providing the first temperature sensor 2104 and the second temperature sensor 2202, the temperature of the flowing-out liquid and the temperature of the flowing-back liquid may be acquired in time, which is more conducive to controlling the thermal management unit 230 by the thermal management system 200 to meet different demands for thermal management, thereby facilitating more accurate and efficient thermal management on the temperature-controlled object.

According to some embodiments of the present application, the thermal management system 200 further includes a control unit 250. The control unit 250 is connected to the thermal management unit 230 and the adjustment apparatus 240.

The control unit 250 may be a processor or controller preset with corresponding control programs, thereby enabling automatic control of the thermal management unit 230. Specifically, the control unit may be in signal connection with the functional components of each branch through control signals to achieve automatic control, such as a compressor, a heater, a valve component, and a sensor. In some examples, the control unit 250 may control different branches of the thermal management unit 230 to open and close, or may control valve components in different branches to control a liquid flow rate, or may control an operating parameter or a detection result of a function corresponding to reception or processing, to control a thermal management capability, such as a heating power, a compressor power, or a cooling capacity. The control unit 250 may directly control the thermal management unit 230, or may be connected to the adjustment apparatus 240, and indirectly control the thermal management unit 230 through the adjustment apparatus 240. For example, the control unit 250 determines a corresponding control strategy according to a corresponding demand for cooling, and transmits a control signal to the adjustment apparatus 240 based on the control strategy, and the adjustment apparatus 240 specifically controls an operating state or an operating parameter, for example, starting, closing, or frequency adjustment, of the functional components of each branch of the thermal management unit 230. In some examples, the adjustment apparatus 240 may be integrated in the compressor of a corresponding branch, for example, it may be a frequency converter of the compressor. Alternatively, the adjustment apparatus may be integrated into the control unit 250, and the control unit 250 performs the function of adjusting the cooling capacity of a single cooling branch.

In some other examples, the control unit 250 may be further in signal connection to the first temperature sensor 2104 and the second temperature sensor 2202, to achieve real-time control of the thermal management unit 230 according to a real-time change of the temperature. In addition, the control unit may be further in signal connection to a temperature sensor of the temperature-controlled object, to further acquire temperature information of the temperature-controlled object, so as to formulate and implement a corresponding control strategy.

By providing the control unit, automatic control of the thermal management system can be achieved, thereby improving an automation level and thermal management efficiency. This meets a complex and changeable demand for thermal management of a temperature-controlled object, and helps perform more accurate and efficient thermal management.

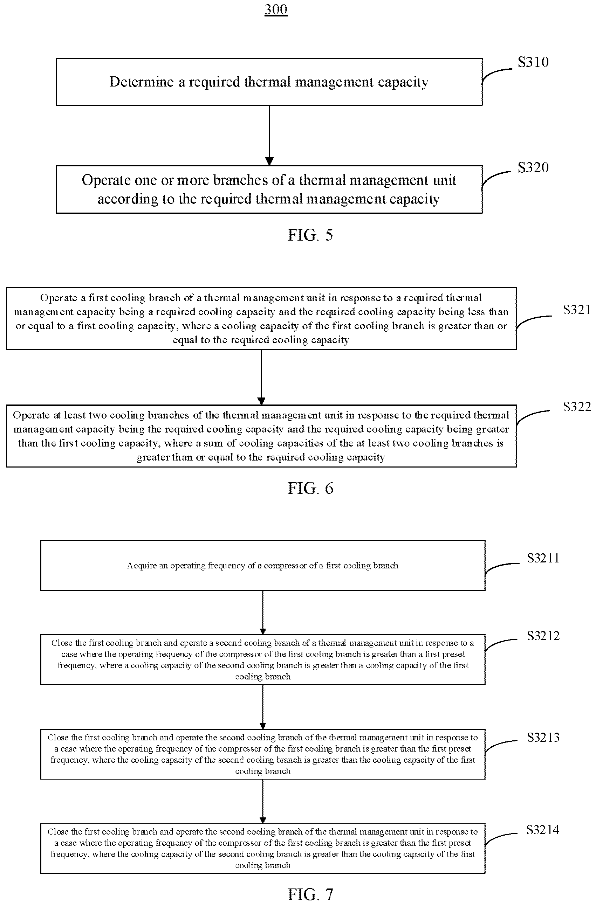

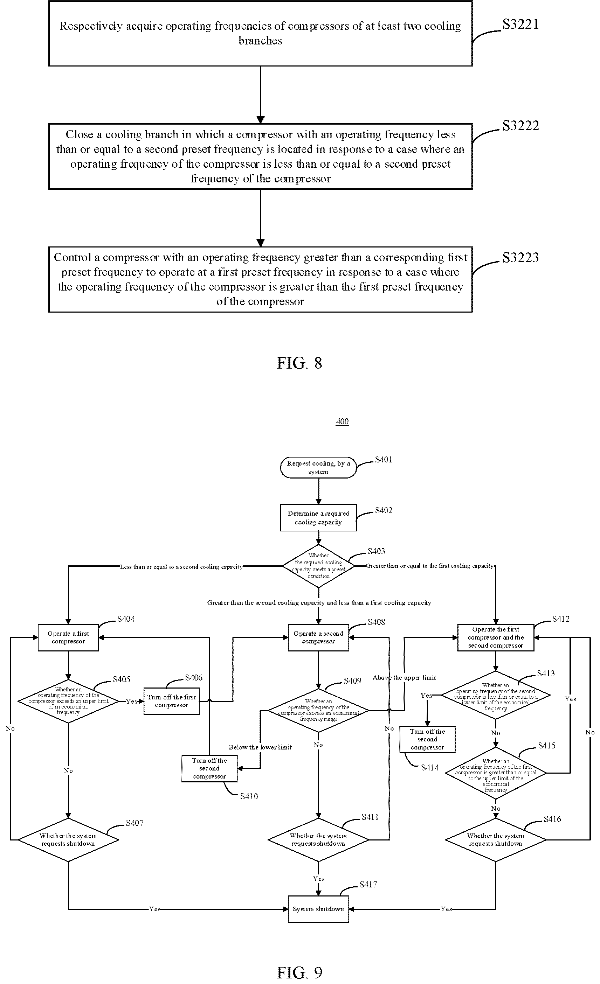

Embodiments of a second aspect of the present application provide a method for controlling a thermal management system 300. Referring to FIGs. 5 to 8, FIG. 5 is a schematic flowchart of a method for controlling a thermal management system 300 according to some embodiments of the present application. FIG. 6 is a schematic flowchart of part of steps of a method for controlling a thermal management system 300 according to some embodiments of the present application. FIG. 7 is a schematic flowchart of another part of steps of a method for controlling a thermal management system 300 according to some embodiments of the present application. FIG. 8 is a schematic flowchart of yet another part of steps of a method for controlling a thermal management system 300 according to some embodiments of the present application.

The thermal management system may be the thermal management system 200 according to the above embodiments. The method for controlling the thermal management 300 includes:

In step S310, a required thermal management capacity of a temperature-controlled object is determined.

The temperature-controlled object may be any object that has a demand for thermal management, such as batteries in an energy storage system, or batteries in other electric devices, such as batteries carried in vehicles, aircraft, and ships. The required thermal management capacity is a thermal processing capacity required for adjusting the temperature of the temperature-controlled object to a preset state. The required thermal management capacity herein may be a cooling capacity required or a heating capacity required. It can be understood that the heat generation of the temperature-controlled object varies under different operating conditions, and thus the demands for thermal management also differ. The required thermal management capacity may be calculated according to a temperature or a related parameter of the temperature-controlled object, or may be determined through direct input.

In step S320, one or more branches of the thermal management unit are operated according to the required thermal management capacity.

The thermal management unit may be the thermal management unit 230 according to the above embodiments. One or more branches of the thermal management unit 230 may control the operation or closing of corresponding branches by controlling corresponding compressors or valve components, thereby achieving an output of different cooling capacities or heating capacities through coordination. The thermal management unit 230 is controlled, according to the determined required thermal management capacity, to control operation of one or more of the plurality of branches according to thermal management capabilities of the plurality of branches. Operation herein refers to controlling components in the branch to enter an operating state and provide cooling or heating to the outside. Specifically, the operation includes but is not limited to turning on and operating a compressor, a heater, and a water pump, turning on or adjusting a pipeline valve component, and the like, to provide a cooling capacity or a heating capacity that matches the required thermal management capacity. It can be understood that the thermal management unit 230 may include a plurality of cooling branches, and may also include a heating branch. The operation of one or more branches claimed in the embodiments may refer to the operation of one or more cooling branches, the operation of one or more heating branches, or the simultaneous operation of the cooling branches and the heating branches. The cooling capacity or heating capacity provided by the thermal management unit 230 does not need to be exactly equal to the required thermal management capacity, and may provide a cooling capacity or heating capacity close to the required thermal management capacity according to the precision of the thermal processing. In some examples, the thermal management unit 230 may automatically formulate a thermal management control strategy that can meet a requirement according to the required thermal management capacity and thermal processing capabilities of different branches, and control a corresponding branch to open and close according to the thermal management control strategy. In some examples, the thermal management unit 230 may provide a cooling capacity or a heating capacity at a plurality of different levels, and control, according to the required thermal management capacity, the thermal management unit 230 to provide a cooling capacity or a heating capacity at a level closest to the required thermal management capacity.

By controlling one or more branches of the thermal management unit to operate or close according to the required thermal management capacity of the temperature-controlled object, the required required thermal management capacity can be provided more accurately, thereby meeting demands for thermal management of the temperature-controlled object in different scenarios and under different operating conditions, and reducing energy consumption of the thermal management system.

In some embodiments, step S310 includes:

acquiring a current temperature of the temperature-controlled object; and
determining, according to the current temperature and a preset target temperature, a required thermal management capacity required for adjusting the temperature-controlled object from the current temperature to the preset temperature.

The current temperature of the temperature-controlled object may be acquired in real time through the temperature sensor. The target temperature is a temperature value preset according to an operating scenario or an operating state of the temperature-controlled object, and is a target value at which a temperature of the temperature-controlled object is expected to decrease or increase after being processed by the thermal management system. The required thermal management capacity required for adjusting the temperature-controlled object from the current temperature to the preset temperature may be calculated according to the current temperature and the target temperature. It can be understood that the required thermal management capacity may be directly automatically calculated by the control system according to the current temperature and the preset target temperature, or may be input into the thermal management system by another additional calculation unit or through manual calculation, to control one or more branches of the thermal management system. Since the current temperature of the temperature-controlled object is acquired in real time, the determined required thermal management capacity is also the latest required capacity. This helps the thermal management system adjust a corresponding thermal management control strategy in time according to the latest required thermal management capacity, for example, adjust operation or closing of a corresponding branch.

A real-time required thermal management capacity of the temperature-controlled object may be obtained according to the current temperature of the temperature-controlled object and the preset target temperature, to control the thermal management system to adjust the control strategy in time, such that the thermal management system can always meet the required thermal management capacity, reduce unnecessary energy loss, and improve operating economy of the thermal management system.

According to some embodiments of the present application, step S320 includes:

In step S321, a first cooling branch of the thermal management unit is operated in response to the required thermal management capacity being a required cooling capacity and the required cooling capacity being less than or equal to a first cooling capacity, where a cooling capacity of the first cooling branch is greater than or equal to the required cooling capacity.
In step S322, at least two cooling branches of the thermal management unit are operated in response to the required thermal management capacity being the required cooling capacity and the required cooling capacity being greater than the first cooling capacity, where a sum of cooling capacities of the at least two cooling branches is greater than or equal to the required cooling capacity.

The first cooling capacity is the maximum value among a plurality of cooling capacities corresponding to the plurality of cooling branches of the thermal management unit.

Each of the plurality of cooling branches 231 of the thermal management unit 230 corresponds to a cooling capacity, and the cooling capacity is used to indicate a cooling supply capability of the cooling branch. For example, for the cooling branch using a fixed-frequency compressor, the corresponding rated cooling capacity is the cooling capacity of the cooling branch. For the cooling branch using a variable-frequency compressor, the maximum cooling capacity of the corresponding cooling capacity range is the cooling capacity of the cooling branch. The first cooling capacity is the maximum value among a plurality of cooling capacities corresponding to the plurality of cooling branches 231 of the thermal management unit 230. When the required thermal management capacity is less than or equal to the first cooling capacity, it means that a cooling capacity of at least one first cooling branch can independently meet the required thermal management capacity. When the required thermal management capacity is greater than the first cooling capacity, it means that none of the cooling branches can independently meet the required thermal management capacity, at least two cooling branches are required to be operated, and the sum of the cooling capacities of the at least two operating cooling branches is greater than or equal to the required cooling capacity.

In some examples, the thermal management unit of the thermal management system at least includes a first cooling branch and a second cooling branch. The first cooling branch includes a first compressor, and the second cooling branch includes a second compressor, where a cooling capacity of the second cooling branch is the maximum cooling capacity, and a branch capacity of the first cooling branch is the minimum cooling capacity. Here, the cooling capacity of the second cooling branch is taken as the first cooling capacity, and the cooling capacity of the first cooling branch is taken as the second cooling capacity.

When the thermal management system receives the thermal management request and determines that the thermal management request is a cooling request, a required required cooling capacity is further determined, and the required cooling capacity is compared with the first cooling capacity.

When the required cooling capacity is less than the first cooling capacity, a cooling branch that can meet the required cooling capacity is opened only. For example, a second cooling branch is opened only. When the required cooling capacity is less than the second cooling capacity, since the cooling capacity of any cooling branch can meet the required cooling capacity, any cooling branch may be operated. Here, the first cooling branch with the minimum cooling capacity may be selected and operated, thereby reducing the energy consumption of the thermal management system.

When the required cooling capacity is greater than or equal to the first cooling capacity, the first cooling branch and the second cooling branch are operated simultaneously to cooperate to provide a cooling capacity that meets the required cooling capacity. It can be understood that when the cooling capacity of at least one of the first cooling branch and the second cooling branch is adjustable, the coordination of the two can achieve continuous change within a certain range of cooling capacity, thereby more accurately meeting the demand for cooling.

According to the required cooling capacities under different operating conditions, the corresponding cooling branches are controlled to provide appropriate cooling capacities. This can reduce the energy consumption level of the thermal management system and improve the operating economy of the thermal management system while meeting different demands for cooling and achieving accurate cooling.

According to some embodiments of the present application, step S321 further includes:

In step S3211, an operating frequency of a compressor of the first cooling branch is acquired.

In step S3212, the first cooling branch is closed and a second cooling branch of the thermal management unit is operated in response to a case where the operating frequency of the compressor of the first cooling branch is greater than a first preset frequency, where a cooling capacity of the second cooling branch is greater than the cooling capacity of the first cooling branch.

In step S3213, the first cooling branch is closed and a third cooling branch of the thermal management unit is operated in response to a case where the operating frequency of the compressor of the first cooling branch is less than a second preset frequency, where a cooling capacity of the third cooling branch is greater than or equal to the required cooling capacity, and less than the cooling capacity of the first cooling branch.

In step S3214, the first cooling branch and a fourth cooling branch of the thermal management unit are simultaneously operated in response to the case where the operating frequency of the compressor of the first cooling branch is greater than the first preset frequency and the cooling capacity of the first cooling branch is the cooling branch with the maximum cooling capacity in the thermal management unit, where a cooling capacity of the fourth cooling branch is less than or equal to the cooling capacity of the first cooling branch.

The second preset frequency is less than the first preset frequency.

It should be noted that the first cooling branch, the second cooling branch, the third cooling branch, and the fourth cooling branch are merely names for distinguishing between different cooling branches, and are not intended to limit a quantity of cooling branches. The variable-frequency compressor differs from the fixed-frequency compressor in that its operating frequency can be adjusted within a certain frequency range, thereby adjusting the rotational speed of the compressor. The frequency range is actually the economical frequency range of the variable-frequency compressor. The operation of the compressor within the economical frequency range enables a balance between operating efficiency of cooling, energy consumption, and service life. Since the operating frequency of the fixed-frequency compressor is always kept at the rated frequency, and only the variable-frequency compressor will change, the cooling capacity of the cooling branch in which the compressor is located and the operating state of the compressor can be determined by acquiring the operating frequency of the compressor, thereby optimizing the control strategy of the thermal management system.

The first preset frequency and the second preset frequency may be set according to the economical frequency range of the variable-frequency compressor. In an example, the first preset frequency may be set as a lower limit value of the economical frequency range, and the second preset frequency may be set as an upper limit value of the economical frequency range. Alternatively, the first preset frequency may be set in a value range close to the lower limit value of the economical frequency range, and the second preset frequency may be set in a value range close to the upper limit value of the economical frequency range. In an example, the economical frequency range of the variable-frequency compressor is 30-120 Hz, the value of the first preset frequency may be 30 Hz, or may be any value between 30-40 Hz, and the second preset frequency may be 120 Hz, or may be any value between 110-120 Hz. It can be understood that economical frequency ranges of different compressors may be different, and the corresponding first preset frequencies and second preset frequencies may also be different.

The operating frequency of the compressor of the first cooling branch may be obtained by detecting an operating parameter of the compressor, or may be calculated according to an output cooling capacity of the first cooling branch determined by the control strategy. It can be understood that when other conditions remain unchanged, the cooling capacity of the first cooling branch is positively correlated with the operating frequency of the compressor. When the operating frequency of the compressor of the first cooling branch is greater than the first preset frequency, it means that the cooling capacity required to be output by the first cooling branch has exceeded the cooling capacity corresponding to the upper limit value of the economical frequency range. In this case, still using the first cooling branch for cooling requires more energy consumption, which is also unfavorable for the service life of the components of the first cooling branch. In this case, a second cooling branch with a greater cooling capacity may be switched to, thereby reducing the operating costs of the thermal management system and extending the service life of the device while meeting the demand for cooling capacity. The second cooling branch may be a variable-frequency compressor or a fixed-frequency compressor.

Correspondingly, if the operating frequency of the compressor of the first cooling branch is less than the second preset frequency, it indicates that the current cooling capacity required does not reach the cooling capacity corresponding to the lower limit value of the first cooling branch in the economical frequency range. In this case, still using the first cooling branch to provide cooling will cause unnecessary energy loss, which is also unfavorable to the service life of the compressor, and the third cooling branch with a smaller cooling capacity can be switched to provide cooling.

In another example, when the cooling capacity of the first cooling branch is already the cooling branch with the maximum cooling capacity in the current thermal management unit, no second cooling branch with a greater cooling capacity is present in the thermal management unit in this case, which means that the cooling capacity provided by a separate cooling branch is not the most economical thermal management control strategy, and two cooling branches, the first cooling branch and the fourth cooling branch, may be simultaneously operated to provide the cooling capacity. Therefore, the corresponding compressor can be in the economical frequency range, thereby reducing the overall energy consumption of the thermal management system. It can be understood that steps S3212-S3214 in the embodiments are independent steps, and respective implementation does not need to depend on another step. A sequence of the steps is not limited in the embodiments.

The control strategy of the cooling branch is further optimized according to the operating frequency of the compressor, such that the thermal management system can reduce the operating costs of the thermal management system, improve the operating economy, and extend the service life of the device while providing sufficient cooling capacity to meet the demand for cooling.

According to some embodiments of the present application, step S321 further includes:
acquiring cumulative operating duration of each cooling branch of the thermal management unit whose cooling capacity is greater than or equal to the required cooling capacity, and determining a cooling branch with the shortest cumulative operating duration as the first cooling branch.

Considering that the cooling capacities of a plurality of cooling branches of the thermal management unit may be greater than or equal to the required cooling capacity, which cooling branch is to be opened may be further selected in combination with the cumulative operating duration of these cooling branches in this case. The cumulative operating duration refers to the cumulative operating time of the corresponding cooling branch in a certain period of time, and the period of time may be specifically set as required, for example, the period of time from the last device maintenance time to the current time, or the period of time from the installation and service of the device to the current time. It can be understood that a longer cumulative operating duration indicates a longer running time of the device and severer operating wear of the device such as a compressor, which is unfavorable for a service life of the entire thermal management system.

The control strategy of the cooling branch is further assisted and optimized in combination with the cumulative operating duration of the cooling branch, thereby better balancing the service life of the devices in each branch, alleviating the excessive wear caused by over-use of some devices, and improving the overall service life of the thermal management system.

According to some embodiments of the present application, step S322 further includes:

> In step S3221, operating frequencies of compressors of the at least two cooling branches are respectively acquired.
> In step S3222, a cooling branch in which a compressor with an operating frequency less than or equal to the second preset frequency is located is closed in response to a case where an operating frequency of the compressor is less than or equal to the second preset frequency of the compressor.
> In step S3223, a compressor with an operating frequency greater than the corresponding first preset frequency is controlled to operate at the first preset frequency in response to a case where the operating frequency of the compressor is greater than the first preset frequency of the compressor.

For a compressor that is in operation, the operating frequency under the current operating state may be obtained through corresponding circuit parameters, sensor detection, calculation, and the like. For the variable-frequency compressor, the operating frequency may be compared with the first preset frequency determined by the upper limit value or the second preset frequency determined by the lower limit value of the economical frequency range of the corresponding compressor. If the operating frequency is less than or equal to the second preset frequency, it can be considered that the cooling branch contributes less to the cooling capacity in this case, which in turn leads to an increase in energy consumption and a reduction in the service life of the compressor. In this case, the cooling branch may be directly closed, thereby reducing the cooling capacity of the thermal management system in a short time. However, on the one hand, the reduced cooling capacity is relatively small, the impact on the overall cooling effect is limited. Moreover, as other cooling branches continue to operate, the required cooling capacity also changes, and the operating state may be switched to a corresponding operating state when other set conditions are met. Therefore, the duration of this phase is relatively short. On the other hand, the energy consumption level of the thermal management system can be significantly reduced, and the service life of the compressor can be improved. This is beneficial for the overall thermal management system.

When the operating frequency of the compressor is greater than the first preset frequency of the compressor, it means that the operating frequency of the compressor has exceeded the economical frequency range, and forcibly operating the cooling branch has a significant adverse effect on the service life of the compressor. In this case, the compressor may be controlled to operate at the first preset frequency. Operating at this frequency reduces the cooling capacity of the compressor to some extent, but it provides better protection for the compressor, thereby extending the service life of the compressor.

By optimizing the control strategy of the thermal management branch when the operating frequency of the compressor exceeds the preset frequency range between the first preset frequency and the second preset frequency, the energy consumption level of the thermal management system is reduced, and the service life of the device in the thermal management system is extended, thereby facilitating the improvement of the overall economy of the thermal management system.

According to some embodiments of the present application, step S320 further includes: operating the heating branch of the thermal management unit in response to the required thermal management capacity being a required heating capacity.

With reference to FIG. 2, in addition to the cooling branch 231, the thermal management unit 230 may further include a heating branch 232. A plurality of heaters 2321 may be connected in series on the heating branch 232 to heat the liquid flowing through, thereby heating the temperature-controlled object through the heat exchange method to meet the required heating capacity of the temperature-controlled object. The operation of the heating branch 232 in the thermal management unit 230 may include opening the corresponding pipeline valve component, or controlling the operating parameters of the heaters 2321 on the pipeline, such as power and quantity, according to the required required heating capacity, thereby heating the liquid to a target temperature. In some examples, the heating branch 232 may also coordinate with the cooling branch 231 to adjust the temperature of the liquid flowing into the first manifold unit 210, thereby better meeting the demand for thermal processing of the temperature-controlled object.

By configuring the heating branch 232 to heat the liquid, the demand for heating of the temperature-controlled object can be met, thereby expanding an application scope of the thermal management system.

Embodiments of a third aspect of the present application further provide an electronic device. The electronic device includes: at least one processor; and a memory communicatively connected to the at least one processor, where the memory stores an instruction executable by the at least one processor, and the instruction is executed by the at least one processor, such that the at least one processor can perform the method for controlling the thermal management system 300 according to the above embodiments.

In the present application, the various embodiments of the systems and technologies described above may be implemented in a digital electronic circuit system, an integrated circuit system, a field-programmable gate array (FPGA), an application specific integrated circuit (ASIC), an application specific standard product (ASSP), a system-on-chip (SOC) system, a complex programmable logic device (CPLD), computer hardware, firmware, software, and/or combinations thereof. The various embodiments may include implementation in one or more computer programs. The one or more computer programs may be executed and/or interpreted on a programmable system including at least one programmable processor. The at least one programmable processor may be a dedicated or general-purpose programmable processor capable of receiving data and instructions from a storage system, at least one input apparatus, and at least one output apparatus, and transmitting data and instructions to the storage system, the at least one input apparatus, and the at least output apparatus.

Embodiments of a fourth aspect of the present application further provide a computer-readable storage medium having a computer program stored thereon. The computer program, when executed by a processor, implements the method for controlling the thermal management system 300 according to the above embodiments.

The computer-readable medium may be a tangible medium that may contain or store a program for use by or in conjunction with the instruction execution system, apparatus, or device. A machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of the machine-readable storage medium include an electrical connection based on one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

Embodiments of a fifth aspect of the present application further provide an energy storage system 1000. The energy storage system includes an energy storage battery 100 and the thermal management system 200 according to the above embodiments. The thermal management system 200 is configured to adjust a temperature of the energy storage battery 100.

The energy storage battery 100 may be a battery type of any structural form, for example, a lithium-sulfur battery, a sodium-ion battery, or a magnesium-ion battery, but is not limited thereto. A single battery may be cylindrical, flat, rectangular parallelepiped, or in other shapes.

Embodiments of a sixth aspect of the present application provide an electric device using a battery as a power source. The electric device includes a battery and the thermal management system 200 according to the above embodiments. The thermal management system 200 is configured to adjust a temperature of the battery.

The electric device may be, but is not limited to, a mobile phone, a tablet, a laptop computer, an electric toy, an electric tool, an electric bicycle, an electric vehicle, a ship, a spacecraft, and the like. The electric toys may include stationary or mobile electric toys, such as game consoles, electric car toys, electric ship toys, or electric airplane toys. The spacecrafts may include airplanes, rockets, space shuttles, spaceships, and the like.

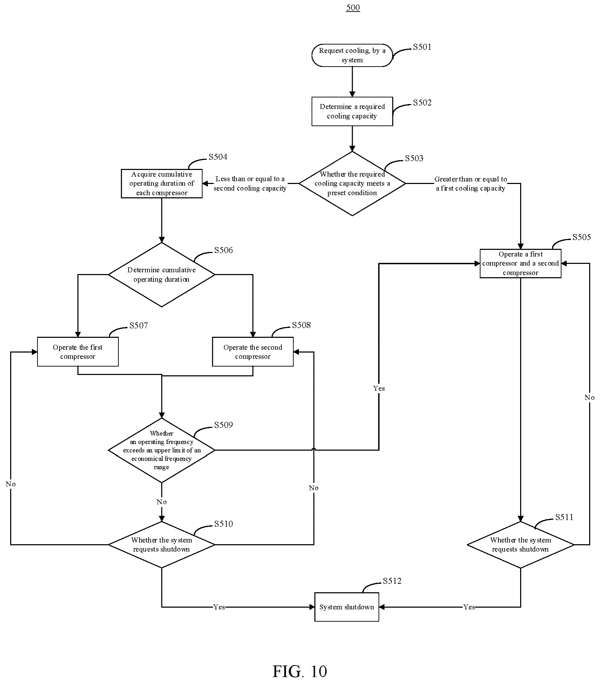

Referring to FIGs. 9 and 10, FIG. 9 is a schematic flowchart of a method for controlling a thermal management system 400 according to some other embodiments of the present application, and FIG. 10 is a schematic flowchart of a method for controlling a thermal management system 500 according to yet other embodiments of the present application.

The above embodiments of the present application will be described in further detail below with reference to the embodiments, as shown in FIGs. 1 to 10.

The thermal management system 200 includes a first manifold unit 210, a thermal management unit 230, and a second manifold unit 220 which are in fluid communication with each other. The first manifold unit 210 is a manifold structure of a liquid outlet end of the thermal management system 200. The first manifold unit 210 includes at least one liquid outlet 2101. The second manifold unit 220 is a manifold structure of a liquid return end of the thermal management system 200 and includes at least one liquid return port 2201. The thermal management unit 230 includes a plurality of cooling branches 231 and at least one heating branch 232. The plurality of cooling branches 231 and the at least one heating branch 232 are separately in fluid connection with the first manifold unit 210 and the second manifold unit 220 in a parallel mode.

The cooling branch 231 includes an evaporator 2311, a gas-liquid separator 2312, a compressor 2313, a condenser 2314, a liquid receiver 2315, and an expansion valve 2316 connected in sequence. A plurality of heaters 2321 are connected in series on the heating branch 232.

The first manifold unit 210 includes a first cavity 211, a second cavity 213, and a connecting cavity 212. The first cavity 211 is in fluid communication with the thermal management unit 230. The second cavity 213 is spaced apart from the first cavity 211, and the second cavity 213 is provided with the at least one liquid outlet 2101. The connecting cavity 212 is in fluid communication with the first cavity 211 and the second cavity 213 separately. A liquid passage cross-sectional area S2 of the connecting cavity 212 is smaller than a liquid passage cross-sectional area S1 of the first cavity 211 and a liquid passage cross-sectional area S3 of the second cavity 213.

The thermal management system 200 further includes a first temperature sensor 2104, a second temperature sensor 2202, and a control unit 250. The first temperature sensor 2104 is configured to detect a liquid temperature in the first manifold unit 210, and the second temperature sensor 2202 is configured to detect a liquid temperature in the second manifold unit 220. The control unit 250 is electrically connected to the thermal management unit 230.

The method for controlling the thermal management system 200 will be further described with reference to FIGs. 9 and 10.

In the thermal management unit 230, the first cooling branch 231A includes a first compressor, and the second cooling branch 231B includes a second compressor. Both the first compressor and the second compressor are variable-frequency compressors. The maximum cooling capacity of the first compressor is a second cooling capacity, the maximum cooling capacity of the second compressor is a first cooling capacity, and the first cooling capacity is greater than the second cooling capacity.

In some examples, the thermal management system 200 may perform control according to the following method for controlling, and specific steps include:

In step S401, the thermal management system receives a cooling request. The cooling request may be a request signal transmitted to the thermal management system from a control system of the energy storage system or the electric device, or may be determined by the thermal management system according to the difference value between the temperature of the temperature-controlled object (for example, an energy storage battery or a battery of the electric device) and a preset target temperature.

In step S402, the cooling capacity is determined. The required cooling capacity is determined according to the cooling request and the difference value between the temperature of the temperature-controlled object (for example, an energy storage battery or a battery of the electric device) and a preset target temperature.

In step S403, whether the required cooling capacity meets a preset condition is determined. If the required cooling capacity is less than or equal to the second cooling capacity, step S404 is performed; if the required cooling capacity is greater than the second cooling capacity and less than the first cooling capacity, step S408 is performed; and if the required cooling capacity is greater than or equal to the first cooling capacity, step S412 is performed.

In step S404, the first compressor is operated. That is, the first cooling branch is operated, such that the first cooling branch in which the first compressor is located operates.

In step S405, whether the operating frequency of the first compressor exceeds the upper limit of the economical frequency is determined. After the operating frequency of the first compressor is acquired, the operating frequency of the first compressor is compared with the upper limit value of the economical frequency range corresponding to the first compressor. If the operating frequency is greater than or equal to the upper limit value of the economical frequency range, it is determined to be yes, and steps S406 and S408 are performed; and if the operating frequency is less than the upper limit value of the economical frequency range, it is determined to be no, and step S407 is performed.

In step S406, the first compressor is turned off. The first cooling branch in which the first compressor is located is closed correspondingly, and step S408 is synchronously performed.

In step S407, whether a shutdown request signal transmitted by the system is received is determined, if yes, step S417 is performed, and if no, step S404 continues to be performed.

In step S408, the second compressor is operated. That is, the second cooling branch is operated, such that the second cooling branch in which the second compressor is located operates.

In step S409, whether the operating frequency of the second compressor exceeds the economical frequency range is determined. After the operating frequency of the second compressor is acquired, the operating frequency of the second compressor is compared with the upper limit value and the lower limit value of the economical frequency range. If the operating frequency is greater than or equal to the upper limit value of the economical frequency range, it is determined to be above the upper limit, and step S412 is performed; if the operating frequency is less than or equal to the lower limit value of the economical frequency range, it is determined to be below the lower limit, and steps S410 and S404 are performed; and if the operating frequency is greater than the lower limit value of the economical frequency range and less than the upper limit value of the economical frequency range, it is determined to be no, and step S411 is performed.

In step S410, the second compressor is turned off, the first cooling branch in which the first compressor is located is closed correspondingly, and step S404 is synchronously performed.

In step S411, whether a shutdown request signal transmitted by the system is received is determined, if yes, step S417 is performed, and if no, step S408 continues to be performed.

In step S412, the first compressor and the second compressor are simultaneously operated. That is, the first cooling branch and the second cooling branch are simultaneously operated, such that the first cooling branch and the second cooling branch operate simultaneously.

In step S413, whether the operating frequency of the second compressor is less than or equal to the lower limit of the economical frequency is determined. The operating frequency of the second compressor is compared with the lower limit value of the economical frequency range corresponding to the second compressor. If the operating frequency is less than or equal to the lower limit value of the economical frequency range, it is determined to be yes, and step S414 is performed; and if the operating frequency is greater than the lower limit value of the economical frequency range, it is determined to be no, and step S415 is performed.

In step S414, the second compressor is turned off.

In step S415, whether the operating frequency of the first compressor is greater than or equal to the upper limit of the economical frequency is determined. The operating frequency of the first compressor is compared with the upper limit value of the economical frequency range corresponding to the first compressor. If the operating frequency is greater than or equal to the upper limit value of the economical frequency range, it is determined to be yes, the upper limit value of the economical frequency range is taken as the operating frequency of the first compressor, and step S412 continues to be performed, that is, the first compressor and the second compressor are kept to operate simultaneously; and if the operating frequency is less than the upper limit value of the economical frequency range, it is determined to be no, and step S416 is performed.

In step S416, whether a shutdown request signal transmitted by the system is received is determined, if yes, step S417 is performed, and if no, step S412 continues to be performed.

In step S417, the system is shut down.

In some other embodiments, the thermal management system 200 may further operate according to the following method for controlling:

In step S501, the thermal management system receives a cooling request.

In step S502, the cooling capacity is determined. The required cooling capacity is determined according to the cooling request and the difference value between the temperature of the temperature-controlled object and a preset target temperature.

In step S503, whether the required cooling capacity meets a preset condition is determined. If the required cooling capacity is less than or equal to the second cooling capacity, step S504 is performed; and if the required cooling capacity is greater than or equal to the first cooling capacity, step S505 is performed.

In step S504, the cumulative operating duration of the first compressor and the second compressor are acquired.

In step S506, the cumulative operating duration of the first compressor and the cumulative operating duration of the second compressor are determined. If the cumulative operating duration of the first compressor is longer, step S507 is performed; and if the cumulative operating duration of the second compressor is longer, step S508 is performed.

In step S507, the first compressor is operated. That is, the first cooling branch is operated, such that the first cooling branch in which the first compressor is located operates.

In step S508, the second compressor is operated. That is, the second cooling branch is operated, such that the second cooling branch in which the second compressor is located operates.

In step S509, the operating frequency of the first compressor or the second compressor is acquired, and the operating frequency is compared with the upper limit value of the corresponding economical frequency range. If the operating frequency is greater than or equal to the upper limit value of the corresponding economical frequency range, it is determined to be yes, and step S505 is performed; and if the operating frequency is less than the upper limit value of the corresponding economical frequency range, it is determined to be no, and step S510 is performed.

In step S510, whether a shutdown request signal transmitted by the system is received is determined, if yes, step S512 is performed, and if no, step S507 or S508 continues to be performed.

In step S505, the first compressor and the second compressor are simultaneously operated. That is, the first cooling branch and the second cooling branch are simultaneously operated, such that the first cooling branch and the second cooling branch operate simultaneously.

In step S511, whether a shutdown request signal transmitted by the system is received is determined, if yes, step S512 is performed, and if no, step S505 continues to be performed.

In step S512, the system is shut down.

Finally, it should be noted that the above embodiments are only used to illustrate the technical solutions of the present application, rather than limit same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of claims and specification of the present application. In particular, the technical features mentioned in the embodiments can be combined in any manner, provided that there is no structural conflict. The present application is not limited to the specific embodiments disclosed herein but includes all the technical solutions that fall within the scope of the claims.

**Claims**

1. A thermal management system, comprising:

   a first manifold unit comprising at least one liquid outlet;
   a second manifold unit comprising at least one liquid return port;
   a thermal management unit comprising a plurality of cooling branches, wherein the plurality of cooling branches are separately in fluid connection with the first manifold unit and the second manifold unit in a parallel mode; and
   an adjustment apparatus configured to adjust a cooling capacity of at least one cooling branch of the plurality of cooling branches.

2. The thermal management system according to claim 1, wherein a compressor of the at least one cooling branch is a variable-frequency compressor, and the adjustment apparatus is connected to the variable-frequency compressor to adjust an operating frequency of the variable-frequency compressor.

3. The thermal management system according to claim 2, wherein a compressor of a cooling branch with a maximum cooling capacity among the plurality of cooling branches is a variable-frequency compressor.

4. The thermal management system according to any one of claims 1 to 3, wherein the thermal management unit further comprises a heating branch, wherein the heating branch and the plurality of cooling branches are separately in fluid connection with the first manifold unit and the second manifold unit in a parallel mode.

5. The thermal management system according to claim 4, wherein a plurality of heaters are connected in series on the heating branch, wherein the plurality of heaters are configured to heat a liquid flowing through the heating branch.

6. The thermal management system according to any one of claims 1 to 5, wherein the first manifold unit comprises:

a first cavity in fluid communication with the thermal management unit;
a second cavity spaced apart from the first cavity and provided with the at least one liquid outlet; and
a connecting cavity in fluid communication with the first cavity and the second cavity separately.

7. The thermal management system according to claim 6, wherein a liquid passage cross-sectional area of the connecting cavity is different from a liquid passage cross-sectional area of the first cavity, or different from a liquid passage cross-sectional area of the second cavity.

8. The thermal management system according to any one of claims 1 to 7, further comprising:

   a first temperature sensor configured to detect a liquid temperature in the first manifold unit; and/or
   a second temperature sensor configured to detect a liquid temperature in the second manifold unit.

9. The thermal management system according to any one of claims 1 to 8, further comprising:
a control unit connected to the thermal management unit and the adjustment apparatus.

10. A method for controlling the thermal management system according to any one of claims 1 to 9, comprising:

    determining a required thermal management capacity; and
    operating one or more branches of the thermal management unit according to the required thermal management capacity.

11. The method for controlling the thermal management system according to claim 10, wherein determining the required thermal management capacity of a temperature-controlled object comprises:

    acquiring a current temperature of the temperature-controlled object; and
    determining, according to the current temperature and a preset target temperature, a required thermal management capacity required for adjusting the temperature-controlled object from the current temperature to the preset temperature.

12. The method for controlling the thermal management system according to claim 10 or 11, wherein operating the one or more branches of the thermal management unit according to the required thermal management capacity comprises:

    operating a first cooling branch of the thermal management unit in response to the required thermal management capacity being a required cooling capacity and the required cooling capacity being less than or equal to a first cooling capacity, wherein a cooling capacity of the first cooling branch is greater than or equal to the required cooling capacity; and
    operating at least two cooling branches of the thermal management unit in response to the required thermal management capacity being the required cooling capacity and the required cooling capacity being greater than the first cooling capacity, wherein a sum of cooling capacities of the at least two cooling branches is greater than or equal to the required cooling capacity, wherein the first cooling capacity is a maximum value among a plurality of cooling capacities respectively corresponding to the plurality of cooling branches of the thermal management unit.

13. The method for controlling the thermal management system according to claim 12, wherein operating the first cooling branch of the thermal management unit in response to the required thermal management capacity being the required cooling capacity and the required cooling capacity being less than or equal to the first cooling capacity, wherein the cooling capacity of the first cooling branch is greater than or equal to the required cooling capacity, further comprises:

    acquiring an operating frequency of a compressor of the first cooling branch;
    closing the first cooling branch and operating a second cooling branch of the thermal management unit in response to a case where the operating frequency of the compressor is greater than a first preset frequency, wherein a cooling capacity of the second cooling branch is greater than the cooling capacity of the first cooling branch;
    closing the first cooling branch and operating a third cooling branch of the thermal management unit in response to a case where the operating frequency of the compressor is less than a second preset frequency, wherein a cooling capacity of the third cooling branch is greater than or equal to the required cooling capacity, and less than the cooling capacity of the first cooling branch; and
    simultaneously operating the first cooling branch and a fourth cooling branch of the thermal management unit in response to a case where the operating frequency of the compressor is greater than the first preset frequency and the first cooling branch is the cooling branch with the maximum cooling capacity in the thermal management unit, wherein a cooling capacity of the fourth cooling branch is less than or equal to the cooling capacity of the first cooling branch, wherein the second preset frequency is less than the first preset frequency.

14. The method for controlling the thermal management system according to claim 12 or 13, wherein operating the first cooling branch of the thermal management unit in response to the case where the required thermal management capacity is the required cooling capacity and the required cooling capacity is less than or equal to the first cooling capacity, wherein the cooling capacity of the first cooling branch is greater than or equal to the required cooling capacity, further comprises:
acquiring cumulative operating duration of each cooling branch of the thermal management unit whose cooling capacity is greater than or equal to the required cooling capacity, and determining a cooling branch with shortest cumulative operating duration as the first cooling branch.

15. The method for controlling the thermal management system according to any one of claims 12 to 14, wherein operating the at least two cooling branches of the thermal management unit in response to the required thermal management capacity being the required cooling capacity and the required cooling capacity being greater than the first cooling capacity, wherein the sum of the cooling capacities of the at least two cooling branches is greater than or equal to the required cooling capacity, further comprises:

    respectively acquiring operating frequencies of compressors of the at least two cooling branches;
    closing a cooling branch in which a compressor with an operating frequency less than or equal to the second preset frequency is located in response to a case where an operating frequency of the compressor is less than or equal to the second preset frequency of the compressor; and
    controlling a compressor with an operating frequency greater than the first preset frequency to operate at the first preset frequency in response to a case where the operating frequency of the compressor is greater than the first preset frequency of the compressor,
    wherein the second preset frequency is less than the first preset frequency.

16. The method for controlling the thermal management system according to any one of claims 10 to 15, wherein operating the one or more branches of the thermal management unit according to the required thermal management capacity further comprises: operating the heating branch of the thermal management unit in response to the required thermal management capacity being a required heating capacity.

17. An electronic device, comprising:

at least one processor; and
a memory communicatively connected to the at least one processor, wherein
the memory stores an instruction executable by the at least one processor, and the instruction is executed by the at least one processor, such that the at least one processor can perform the method for controlling the thermal management system according to any one of claims 10 to 16.

18. A computer-readable storage medium having a computer program stored thereon, wherein the computer program, when executed by a processor, performs the method for controlling the thermal management system according to any one of claims 10 to 16.

19. An energy storage system, comprising:

an energy storage battery, and
the thermal management system according to any one of claims 1 to 9, wherein the thermal management system is configured to adjust a temperature of the energy storage battery.

20. An electric device, comprising:

a battery, and
the thermal management system according to any one of claims 1 to 9, wherein the thermal management system is configured to adjust a temperature of the battery.

FIG. 1

FIG. 2

FIG. 3

FIG. 4

300

```
┌─────────────────────────────────────────────────────────┐
│                                                         │──── S310
│      Determine a required thermal management capacity   │
│                                                         │
└─────────────────────────────────────────────────────────┘
                            │
                            ▼
┌─────────────────────────────────────────────────────────┐
│    Operate one or more branches of a thermal management │──── S320
│     unit according to the required thermal management   │
│                       capacity                          │
└─────────────────────────────────────────────────────────┘
```

FIG. 5

```
┌─────────────────────────────────────────────────────────┐
│ Operate a first cooling branch of a thermal management  │
│ unit in response to a required thermal management       │──── S321
│ capacity being a required cooling capacity and the      │
│ required cooling capacity being less than or equal to a │
│ first cooling capacity, where a cooling capacity of the │
│ first cooling branch is greater than or equal to the    │
│ required cooling capacity                               │
└─────────────────────────────────────────────────────────┘
                            │
                            ▼
┌─────────────────────────────────────────────────────────┐
│ Operate at least two cooling branches of the thermal    │──── S322
│ management unit in response to the required thermal     │
│ management capacity being the required cooling capacity │
│ and the required cooling capacity being greater than    │
│ the first cooling capacity, where a sum of cooling      │
│ capacities of the at least two cooling branches is      │
│ greater than or equal to the required cooling capacity  │
└─────────────────────────────────────────────────────────┘
```

FIG. 6

```
┌─────────────────────────────────────────────────────────┐
│   Acquire an operating frequency of a compressor of a   │──── S3211
│                 first cooling branch                    │
└─────────────────────────────────────────────────────────┘
                            │
                            ▼
┌─────────────────────────────────────────────────────────┐
│ Close the first cooling branch and operate a second     │
│ cooling branch of a thermal management unit in response │──── S3212
│ to a case where the operating frequency of the          │
│ compressor of the first cooling branch is greater than  │
│ a first preset frequency, where a cooling capacity of   │
│ the second cooling branch is greater than a cooling     │
│ capacity of the first cooling branch                    │
└─────────────────────────────────────────────────────────┘
                            │
                            ▼
┌─────────────────────────────────────────────────────────┐
│ Close the first cooling branch and operate the second   │
│ cooling branch of the thermal management unit in        │──── S3213
│ response to a case where the operating frequency of the │
│ compressor of the first cooling branch is greater than  │
│ the first preset frequency, where the cooling capacity  │
│ of the second cooling branch is greater than the        │
│ cooling capacity of the first cooling branch            │
└─────────────────────────────────────────────────────────┘
                            │
                            ▼
┌─────────────────────────────────────────────────────────┐
│ Close the first cooling branch and operate the second   │
│ cooling branch of the thermal management unit in        │──── S3214
│ response to a case where the operating frequency of the │
│ compressor of the first cooling branch is greater than  │
│ the first preset frequency, where the cooling capacity  │
│ of the second cooling branch is greater than the        │
│ cooling capacity of the first cooling branch            │
└─────────────────────────────────────────────────────────┘
```

FIG. 7

Respectively acquire operating frequencies of compressors of at least two cooling branches — S3221

Close a cooling branch in which a compressor with an operating frequency less than or equal to a second preset frequency is located in response to a case where an operating frequency of the compressor is less than or equal to a second preset frequency of the compressor — S3222

Control a compressor with an operating frequency greater than a corresponding first preset frequency to operate at a first preset frequency in response to a case where the operating frequency of the compressor is greater than the first preset frequency of the compressor — S3223

FIG. 8

400

Request cooling, by a system — S401

Determine a required cooling capacity — S402

Whether the required cooling capacity meets a preset condition — S403

Less than or equal to a second cooling capacity

Greater than or equal to the first cooling capacity

Greater than the second cooling capacity and less than a first cooling capacity

Operate a first compressor — S404

Operate a second compressor — S408

Operate the first compressor and the second compressor — S412

Whether an operating frequency of the compressor exceeds an upper limit of an economical frequency — S405

Turn off the first compressor — S406

Yes

No

No

Whether an operating frequency of the compressor exceeds an economical frequency range — S409

Above the upper limit

Below the lower limit

No

Turn off the second compressor — S410

Whether an operating frequency of the second compressor is less than or equal to a lower limit of the economical frequency — S413

Yes

Turn off the second compressor — S414

No

Whether an operating frequency of the first compressor is greater than or equal to the upper limit of the economical frequency — S415

Yes

No

No

Whether the system requests shutdown — S407

Whether the system requests shutdown — S411

Whether the system requests shutdown — S416

Yes

Yes

Yes

System shutdown — S417

FIG. 9

500

Request cooling, by a system — S501

Determine a required cooling capacity — S502

Whether the required cooling capacity meets a preset condition — S503

Acquire cumulative operating duration of each compressor — S504

Less than or equal to a second cooling capacity

Greater than or equal to a first cooling capacity

Operate a first compressor and a second compressor — S505

Determine cumulative operating duration — S506

Operate the first compressor — S507

Operate the second compressor — S508

Whether an operating frequency exceeds an upper limit of an economical frequency range — S509

Yes

No

No

No

Whether the system requests shutdown — S510

Whether the system requests shutdown — S511

System shutdown — S512

Yes

Yes

FIG. 10

## INTERNATIONAL SEARCH REPORT

| International application No. |
|---|
| **PCT/CN2023/128433** |

**A. CLASSIFICATION OF SUBJECT MATTER**

H01M10/613(2014.01)i; G12B15/02(2006.01)i

According to International Patent Classification (IPC) or to both national classification and IPC

**B. FIELDS SEARCHED**

Minimum documentation searched (classification system followed by classification symbols)

IPC:H01M,G12B

Documentation searched other than minimum documentation to the extent that such documents are included in the fields searched

Electronic data base consulted during the international search (name of data base and, where practicable, search terms used)

CNTXT, WPABSC, ENTXTC, VEN, CNKI: 热管理, 制冷, 液冷, 水冷, 汇流, 并列, 并联, 调节, 调整, heat, manage, cool, combine, parallel, adjust

**C. DOCUMENTS CONSIDERED TO BE RELEVANT**

| Category* | Citation of document, with indication, where appropriate, of the relevant passages | Relevant to claim No. |
|---|---|---|
| PX | CN 116435654 A (NINGDE CONTEMPORARY AMPEREX TECHNOLOGY CO., LTD.) 14 July 2023 (2023-07-14) claims 1-20 | 1-20 |
| Y | CN 200947718 Y (COOLER MASTER CO., LTD.) 12 September 2007 (2007-09-12) description, pages 2-4, and figures 1-4 | 1-20 |
| Y | CN 109599604 A (BYD CO., LTD.) 09 April 2019 (2019-04-09) description, paragraphs 51-125, and figures 1-16 | 1-20 |
| Y | CN 108427494 A (SHENZHEN YANPAI TECHNOLOGY CO., LTD.) 21 August 2018 (2018-08-21) description, paragraphs 3-45, and figures 1-16 | 1-20 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **26 January 2024** | **04 February 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/128433** |

| Patent document cited in search report | | | Publication date (day/month/year) | Patent family member(s) | | | Publication date (day/month/year) |
| --- | --- | --- | --- | --- | --- | --- | --- |
| CN | 116435654 | A | 14 July 2023 | None | | | |
| CN | 200947718 | Y | 12 September 2007 | None | | | |
| CN | 109599604 | A | 09 April 2019 | None | | | |
| CN | 108427494 | A | 21 August 2018 | WO | 2019218380 | A1 | 21 November 2019 |
| | | | | TW | 201839346 | A | 01 November 2018 |
| | | | | US | 2019072334 | A1 | 07 March 2019 |
| | | | | US | 10697704 | B2 | 30 June 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310681751